# EUROPÄISCHE PATENTSCHRIFT

(11) **EP 3 381 116 B1**
(45) Veröffentlichungstag und Bekanntmachung des Hinweises auf die Patenterteilung: **25.03.2020**
(21) Anmeldenummer: 16701266.5
(22) Anmeldetag: 19.01.2016
(51) Int. Cl.: H02M 7/483, H02J 3/36

(54) **MODULARER MULTILEVELUMRICHTER**
MODULAR MULTILEVEL CONVERTER
ONDULEUR MULTINIVEAUX MODULAIRE

(43) Veröffentlichungstag der Anmeldung: 03.10.2018
(73) Patentinhaber: Siemens Aktiengesellschaft, 80333 München (DE)
(72) Erfinder: ALVAREZ VALENZUELA, Rodrigo Alonso, 90419 Nürnberg (DE); DORN, Jörg, 96155 Buttenheim (DE); ERGIN, Dominik, 91083 Baiersdorf (DE); GAMBACH, Herbert, 91080 Uttenreuth (DE); GOBLIRSCH, Wolfgang, 90587 Tuchenbach (DE); LANG, Jörg, 95346 Stadtsteinach (DE); PIESCHEL, Martin, 90473 Nürnberg (DE); SCHREMMER, Frank, 90768 Fürth (DE)
(86) Internationale Anmeldenummer: PCT/EP2016/050960
(87) Internationale Veröffentlichungsnummer: WO 2017/125134

(56) Entgegenhaltungen:
- EP-A1- 2 549 634
- EP-A1- 2 905 889
- WO-A1-2011/120572
- WO-A1-2013/178249
- DE-A1-102005 041 087

## Beschreibung

Die Erfindung betrifft einen modularen Multilevelumrichter mit einer Vielzahl von Submodulen, welche jeweils mindestens zwei elektronische Schaltelemente und einen elektrischen Energiespeicher aufweisen.

Umrichter sind leistungselektronische Schaltungen zum Umwandeln von elektrischer Energie. Mit Umrichtern kann Wechselstrom in Gleichstrom, Gleichstrom in Wechselstrom, Wechselstrom in Wechselstrom anderer Frequenz und/oder Amplitude oder Gleichstrom in Gleichstrom anderer Spannung umgewandelt werden. Umrichter können eine Vielzahl von gleichartigen Modulen (sogenannte Submodule) aufweisen, welche elektrisch in Reihe geschaltet sind. Diese Submodule weisen jeweils mindestens zwei elektronische Schaltelemente und einen elektrischen Energiespeicher auf. Solche Umrichter werden als modulare Multilevelumrichter bezeichnet. Durch die elektrische Reihenschaltung der Submodule lassen sich hohe Ausgangsspannungen erreichen. Die Umrichter sind einfach an unterschiedliche Spannungen anpassbar (skalierbar) und eine gewünschte Ausgangsspannung kann relativ genau erzeugt werden. Modulare Multilevelumrichter werden oftmals im Hochspannungsbereich eingesetzt, beispielsweise als Umrichter bei Hochspannungs-Gleichstrom-Übertragungsanlagen oder als Blindleistungskompensatoren bei flexiblen Drehstromübertragungssystemen.

Zur Ansteuerung der in den Submodulen enthaltenen elektronischen Schaltelemente und zur Rückmeldung von Zuständen der Submodule (beispielsweise zur Rückmeldung des Ladezustandes des Energiespeichers des Submoduls) werden Nachrichten zwischen einer zentralen Steuereinrichtung und den Submodulen ausgetauscht. Aus Gründen der einfachen und kostengünstigen Realisierbarkeit ist es wünschenswert, die Steuereinrichtung auf Erdpotenzial anzuordnen, wohingegen die einzelnen Submodule sich auf unterschiedlichen Spannungspotenzialen (unter anderem auch auf Hochspannungspotenzial) befinden können. Daher erfolgt die Nachrichtenübertragung zu den Submodulen mittels Lichtwellenleiter.

Dabei ist es denkbar, von der zentralen Steuereinrichtung einen Lichtwellenleiter zu jedem Submodul zu verlegen (um Nachrichten von der Steuereinrichtung zu dem Submodul zu übertragen) und einen weiteren Lichtwellenleiter von dem Submodul zu der Steuereinrichtung zu verlegen (um Nachrichten von dem Submodul zu der Steuereinrichtung zu übertragen). Bei dieser Lösung werden also je Submodul zwei Lichtwellenleiter benötigt, welche sich von dem Submodul zu der Steuereinrichtung erstrecken. Da sich die Steuereinrichtung in einer beträchtlichen Entfernung zu dem jeweiligen Submodul befinden kann (beispielsweise können solche Entfernungen 100 m und mehr betragen), werden erhebliche Längen von Lichtwellenleitern benötigt und es fallen beträchtliche Kosten für diese Lichtwellenleiter sowie für deren Verlegung an. Die europäische Patentanmeldung EP2549634-A1 und die internationale Patentanmeldung WO 2011/120572-A1 offenbaren modulare Multilevelumrichter, zugehörig dem Gebiet der Leistungselektronik, zum Wandeln elektrischer Leistung. Hierbei sind Submodule des Multilevelumrichters zum Austausch von Steuer- und Zustandsinformationen über optische Lichtwellenkabel mit einer zentralen Steuereinrichtung verbunden.

Der Erfindung liegt die Aufgabe zugrunde, einen Umrichter und ein Verfahren anzugeben, mit denen die Übertragung von Nachrichten zu den Submodulen kostengünstig realisiert werden kann.

Diese Aufgabe wird erfindungsgemäß gelöst durch einen Umrichter und durch ein Verfahren nach den unabhängigen Patentansprüchen. Vorteilhafte Ausführungsformen des Umrichters und des Verfahrens sind in den jeweiligen abhängigen Patentansprüchen angegeben.

Die Erfindung ist durch die unabhängigen Ansprüche definiert. Vorteilhafte Ausgestaltungen ergeben sich durch die abhängigen Ansprüche.

Offenbart wird ein modularer Multilevelumrichter mit Submodulen, welche jeweils mindestens zwei elektronische (insbesondere leistungselektronische) Schaltelemente, einen elektrischen Energiespeicher, zwei galvanische Stromanschlüsse, einen optischen Kommunikationseingang und einen optischen Kommunikationsausgang aufweisen, wobei eine Mehrzahl der Submodule mittels ihres Kommunikationseingangs und ihres Kommunikationsausgangs (kommunikationsbezogen) zu einer Serienschaltung verbunden sind (das heißt, in Serie geschaltet sind). Dabei ist besonders vorteilhaft, dass die Mehrzahl der Submodule (kommunikationsbezogen) eine Serienschaltung (Reihenschaltung) bilden. Mit anderen Worten ist also der optische Kommunikationsausgang eines Submoduls mit dem optischen Kommunikationseingang des benachbarten Submoduls der Serienschaltung verbunden. Der optische Kommunikationsausgang des benachbarten Submoduls ist mit dem optischen Kommunikationseingang des nächsten Submoduls der Serienschaltung verbunden und so weiter. Dabei ist vorteilhaft, dass jedes Submodul der Serienschaltung mittels seines optischen Kommunikationsausgangs Nachrichten, insbesondere Telegrammnachrichten, an das benachbarte Submodul der Serienschaltung übermitteln kann. Dadurch ergeben sich (räumlich) kurze Kommunikationswege von einem Submodul der Serienschaltung zum benachbarten Submodul der Serienschaltung.

Der modulare Multilevelumrichter kann so ausgestaltet sein, dass das erste Submodul der Serienschaltung und das letzte Submodul der Serienschaltung jeweils mit einer der Serienschaltung zugeordneten Kommunikationseinrichtung verbunden sind. Dadurch kann die Kommunikationseinrichtung mit allen Submodulen der Serienschaltung kommunizieren.

Der modulare Multilevelumrichter kann so ausgestaltet sein, dass die Submodule der Serienschaltung und die der Serienschaltung zugeordnete Kommunikationseinrichtung eine Ringstruktur bilden. Dadurch ist sichergestellt, dass die Kommunikationseinrichtung zum einen Nachrichten an alle Submodule der Serienschaltung absenden kann, und dass zum anderen auch alle Submodule der Serienschaltung Nachrichten an die Kommunikationseinrichtung absenden können.

Der modulare Multilevelumrichter kann auch so ausgestaltet sein, dass die Kommunikationseinrichtung ein Master ist und die Submodule der Serienschaltung jeweils ein Slave sind. Dies ermöglicht es vorteilhafterweise der Kommunikationseinrichtung, die Kommunikation mit den als Slave ausgebildeten Submodulen zu steuern und zu kontrollieren.

Der modulare Multilevelumrichter kann auch so ausgestaltet sein, dass mindestens ein Submodul (der Serienschaltung) eine optische Überbrückungseinrichtung (optischer Bypass) aufweist (wobei die Überbrückungseinrichtung das Submodul zumindest zeitweise optisch überbrückt). Insbesondere kann der modulare Multilevelumrichter auch so ausgestaltet sein, dass die Submodule jeweils eine optische Überbrückungseinrichtung aufweisen. Insbesondere kann die Überbrückungseinrichtung das Submodul bei einem Defekt des Submoduls überbrücken. Beispielsweise kann die Überbrückungseinrichtung das Submodul überbrücken, wenn die submodulinterne Spannungsversorgung ausfällt. Die Überbrückungseinrichtung ermöglicht es vorteilhafterweise, dass auch bei einem Ausfall eines Submoduls die Kommunikation zu und von den anderen Submodulen der Serienschaltung weitergeführt werden kann. Dadurch wird die Verfügbarkeit des modularen Multilevelumrichters deutlich verbessert.

Der modulare Multilevelumrichter kann auch so ausgestaltet sein, dass die Überbrückungseinrichtung zumindest zeitweise den optischen Kommunikationseingang des Submoduls mit dem optischen Kommunikationsausgang des Submoduls optisch verbindet.

Der modulare Multilevelumrichter kann auch so ausgestaltet sein, dass die Überbrückungseinrichtung einen optischen Spiegel aufweist. Dieser optische Spiegel funktioniert vorteilhafterweise auch ohne elektrische Hilfsenergie, so dass die Überbrückungseinrichtung auch bei einem elektrischen Defekt des Submoduls funktionsfähig bleibt.

Der modulare Multilevelumrichter kann so ausgestaltet sein, dass die benachbarten Submodule der Serienschaltung mittels eines Lichtwellenleiters optisch verbunden sind und/oder das erste Submodul der Serienschaltung und das letzte Submodul der Serienschaltung jeweils mittels eines Lichtwellenleiters mit der (der Serienschaltung zugeordneten) Kommunikationseinrichtung optisch verbunden sind. Durch die Lichtwellenleiter wird eine elektrische Potenzialtrennung zwischen den Submodulen und/oder zwischen den Submodulen und der Kommunikationseinrichtung erreicht.

Der modulare Multilevelumrichter kann auch so ausgestaltet sein, dass der Multilevelumrichter eine (zentrale) Steuereinrichtung für die Submodule aufweist, wobei die Steuereinrichtung mittels einer Kommunikationsverbindung mit der Kommunikationseinrichtung verbunden ist. Dadurch wird ein Nachrichtenaustausch zwischen der Steuereinrichtung und den Submodulen über die Kommunikationseinrichtung ermöglicht. Die Kommunikationsverbindung kann einen oder mehrere Lichtwellerleiter aufweisen.

Der modulare Multilevelumrichter kann auch so ausgestaltet sein, dass jedes Submodul der Serienschaltung mit seinem benachbarten Submodul mittels zweier Lichtwellenleiter verbunden ist, wobei einer der beiden Lichtwellenleiter ein redundanter Lichtwellenleiter ist. Bei dieser Ausgestaltungsvariante des modularen Multilevelumrichters ist vorteilhaft, dass der Umrichter auch bei Ausfall eines Lichtwellenleiters funktionsfähig ist, weil dann die Kommunikation über den anderen der beiden Lichtwellenleiter erfolgt.

Der modulare Multilevelumrichter kann so ausgestaltet sein, dass der Multilevelumrichter eine Mehrzahl von (unabhängigen) Serienschaltungen und eine Mehrzahl von den Serienschaltungen zugeordneten (unabhängigen) Kommunikationseinrichtungen aufweist. Dies ermöglicht es, die Submodule des Multilevelumrichters auf mehrere Serienschaltungen zu verteilen. Dadurch wird zum einen vermieden, dass zu viele Submodule in einer Serienschaltung angeordnet sind (dies ergäbe unter Umständen zu große Nachrichtenlaufzeiten innerhalb der Serienschaltung). Zum anderen wird damit vorteilhafterweise erreicht, dass bei einem Ausfall einer Serienschaltung die anderen Serienschaltungen unabhängig von der ausgefallenen Serienschaltung weiterarbeiten können.

Der modulare Multilevelumrichter kann auch so ausgestaltet sein, dass der Multilevelumrichter eine Mehrzahl von (unabhängigen) Ringstrukturen aufweist (welche jeweils eine Serienschaltung und eine Kommunikationseinrichtung aufweisen). Diese Variante des Multilevelumrichters hat gleichartige Vorteile wie die zuvor genannte Variante.

Offenbart wird weiterhin ein Verfahren zum Übertragen einer Nachricht zwischen einer Kommunikationseinrichtung und Submodulen eines modularen Multilevelumrichters, wobei die Submodule jeweils mindestens zwei elektronische (insbesondere leistungselektronische) Schaltelemente, einen elektrischen Energiespeicher, zwei galvanische Stromanschlüsse, einen optischen Kommunikationseingang und einen optischen Kommunikationsausgang aufweisen, und wobei die Submodule mittels ihres Kommunikationseingangs und ihres Kommunikationsausgangs (kommunikationsbezogen) zu einer Serienschaltung verbunden sind, wobei bei dem Verfahren
- die Nachricht von der Kommunikationseinrichtung mittels eines ersten Lichtwellenleiters zu einem optischen Kommunikationseingang eines ersten Submoduls der Serienschaltung übertragen wird,
- daraufhin die Nachricht von einem optischen Kommunikationsausgangs des ersten Submoduls mittels eines zweiten Lichtwellenleiters zu einem optischen Kommunikationseingang eines zweiten Submoduls der Serienschaltung übertragen wird, und
- die Nachricht nacheinander (jeweils mittels weiterer Lichtwellenleiter) zu den weiteren Submodulen der Serienschaltung übertragen wird, bis die Nachricht das letzte Submodul der Serienschaltung erreicht. Bei diesem Verfahren ist es vorteilhafterweise möglich, die Nachricht von der Kommunikationseinrichtung nacheinander (schrittweise) zu allen Submodulen der Serienschaltung zu übertragen. Dazu werden zwischen den einzelnen Submodulen der Serienschaltung lediglich Lichtwellenleiter benötigt, deren Länge in etwa dem Abstand zwischen den einzelnen Submodulen entspricht. Da die Submodule im Regelfall relativ dicht beieinander angeordnet sind, lassen sich dadurch mit relativ kurzen Lichtwellenleiterlängen die Übertragung der Nachrichten zu und von den Submodulen realisieren.

Das Verfahren kann so ausgestaltet sein, dass daraufhin die Nachricht von einem optischen Kommunikationsausgangs des letzten Submoduls (der Serienschaltung) zu der Kommunikationseinrichtung übertragen wird. Mit dieser Variante des Verfahrens ist es auch möglich, die Telegramnachricht nach Durchlauf durch die Serienschaltung zu der Kommunikationseinrichtung zurück zu übertragen.

Das Verfahren kann auch so ausgestaltet sein, dass jedem Submodul der Serienschaltung eine (insbesondere eineindeutige) Adresse zugeordnet ist, die Nachricht mit der Adresse eines Submoduls der Serienschaltung versehen wird, aufgrund dieser Adresse dieses eine Submodul eine in der Nachricht enthaltene Anweisung ausführt (wohingegen die anderen Submodule der Serienschaltung die Anweisung ignorieren). Diese Variante des Verfahrens ermöglicht es, genau ein Submodul der Serienschaltung mit der Nachricht anzusprechen, wobei die Nachricht nacheinander zu allen Submodulen der Serienschaltung gelangt.

Das Verfahren kann so ausgestaltet sein, dass dieses eine Submodul der Serienschaltung Daten in die Nachricht einschreibt (wohingegen die anderen Submodule der Serienschaltung die Nachricht unverändert weiterleiten). Durch diese Variante des Verfahrens wird es ermöglicht, dass das adressierte Submodul Daten an die Kommunikationseinrichtung überträgt.

Das Verfahren kann so ablaufen, dass mehrere (insbesondere an verschiedene Submodule adressierte) Nachrichten nacheinander in getrennten Zeitschlitzen (in der Serienschaltung) übertragen werden. Dadurch lässt sich vorteilhafterweise ein Zeitmultiplex-Nachrichten-Übertragungsverfahren realisieren, insbesondere ein sog. Adressen-Multiplex-Übertragungsverfahren.

Die genannten Ausführungsformen des Verfahrens weisen auch gleichartige Vorteile auf, wie sie oben im Zusammenhang mit dem modularen Multilevelumrichter angegeben sind.

Im Folgenden wird die Erfindung anhand von Ausführungsbeispielen näher erläutert. Gleiche Bezugszeichen verweisen dabei auf gleiche oder gleich wirkende Elemente. Dazu ist in
- Figur 1: ein Ausführungsbeispiel eines modularen Multilevelumrichters, in
- Figur 2: ein Ausführungsbeispiel eines Submoduls, in
- Figur 3: ein weiteres Ausführungsbeispiel eines Submoduls, in
- Figur 4: ein Ausführungsbeispiel eines Multilevelumrichters mit mehreren Serienschaltungen von Submodulen, in
- Figur 5: ein Ausführungsbeispiel eines Multilevelumrichters mit redundanten Lichtwellenleitern, in
- Figur 6: ein Ausführungsbeispiel eines Submoduls mit einer Überbrückungseinrichtung und in
- Figur 7: ein beispielhafter Verfahrensablauf
dargestellt.

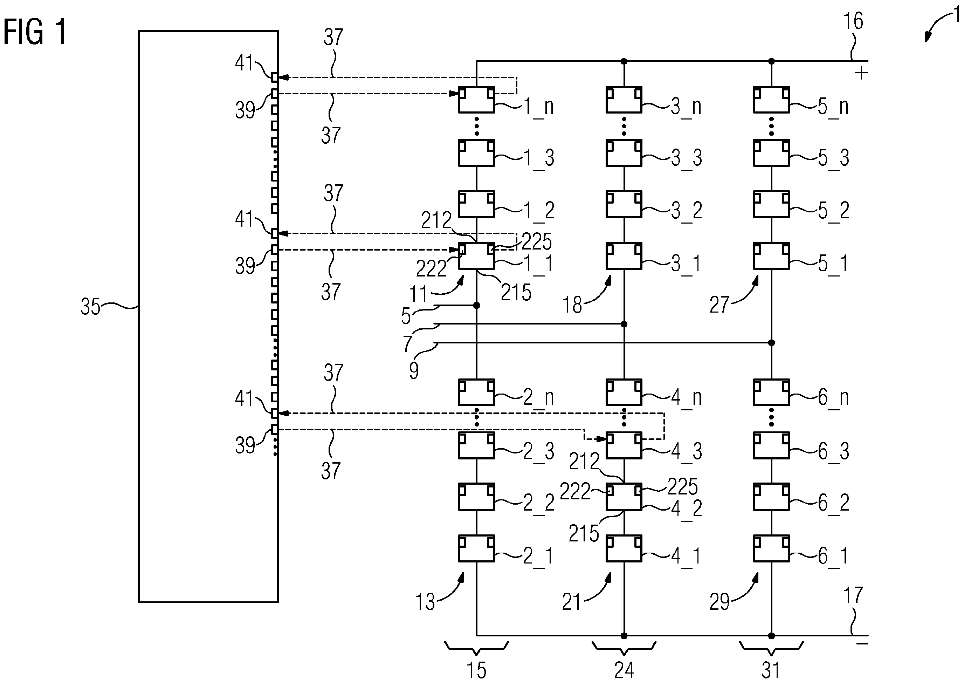

In Figur 1 ist ein Umrichter 1 in Form eines modularen Multilevelumrichters 1 (modular multilevel converter, MMC) dargestellt. Dieser Multilevelumrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Umrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden.

Jeder Phasenmodulzweig weist eine Mehrzahl von Submodulen (1_1, 1_2, 1_3, ... 1_n; 2_1 ... 2_n; usw.) auf, welche (mittels ihrer galvanischen Stromanschlüsse) elektrisch in Reihe geschaltet sind. Im Ausführungsbeispiel der Figur 1 weist jeder Phasenmodulzweig n Submodule auf. Die Anzahl der (mittels ihrer galvanischen Stromanschlüsse) elektrisch in Reihe geschalteten Submodule kann sehr verschieden sein, mindestens sind zwei Submodule in Reihe geschaltet, es können aber auch beispielsweise 50 oder 100 Submodule elektrisch in Reihe geschaltet sein. Im Ausführungsbeispiel ist n = 36: der erste Phasenmodulzweig weist also 36 Submodule 1_1, 1_2, 1_3, ... 1_36 auf.

Im linken Bereich der Figur 1 ist schematisch eine Steuereinrichtung 35 für die Submodule 1_1 bis 6_n dargestellt. Von dieser zentralen Steuereinrichtung 35 werden optische Nachrichten zu den einzelnen Submodulen übertragen. Die Nachrichtenübertragung zwischen der Steuereinrichtung und einem Submodul ist jeweils symbolhaft durch eine gestrichelte Linie 37 dargestellt; die Richtung der Nachrichtenübertragung ist durch die Pfeilspitze an den gestrichelten Linien 37 symbolisiert. Die Steuereinrichtung 35 sendet mittels optischer Ausgänge 39 optische Nachrichten an die Submodule ab und empfängt optische Nachrichten von den einzelnen Submodulen mittels optischer Eingänge 41. Dies ist am Beispiel der Submodule 1_1, 1_n und 4_3 dargestellt; zu den anderen Submodulen werden auf die gleiche Art und Weise optische Nachrichten gesendet bzw. von diesen Submodulen empfangen. Nach der Darstellung der Figur 1 werden also pro Submodul zwei Lichtwellenleiter benötigt, die sich jeweils zwischen dem Submodul und der Steuereinrichtung erstrecken. Dies ist die eingangs beschriebene teure Lösung mit großen benötigten Lichtwellenleiterlängen. Im Unterschied dazu wird im Folgenden eine andere Lösung beschrieben, bei der kleinere Lichtwellenleiterlängen ausreichend sind.

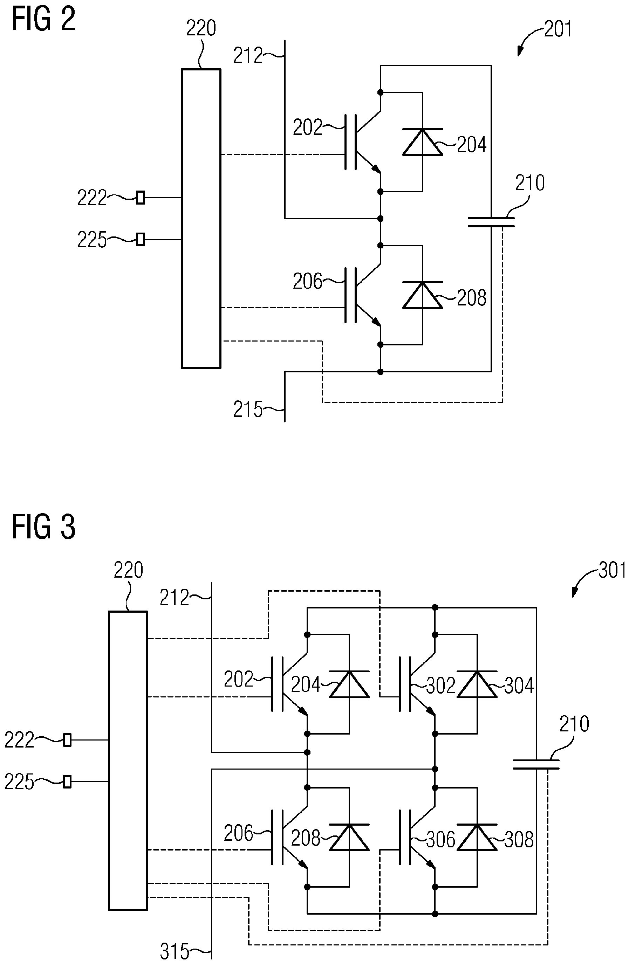

In Figur 2 ist beispielhaft der prinzipielle Aufbau eines Submoduls 201 dargestellt. Dabei kann es sich beispielsweise um das Submodul 1_1 des ersten Phasenmodulzweigs 11 (oder auch um eines der anderen in Figur 1 dargestellten Submodule) handeln. Das Submodul ist als ein Halbbrückenmodul 201 ausgestaltet. Das Submodul 201 weist ein erstes abschaltbares Halbleiterventil 202 mit einer ersten antiparallel geschalteten Diode 204 auf. Weiterhin weist das Submodul 201 ein zweites abschaltbares Halbleiterventil 206 mit einer zweiten antiparallel geschalteten Diode 208 sowie einen elektrischen Energiespeicher 210 in Form eines Kondensators 210 auf. Das erste abschaltbare Halbleiterventil 202 ist ein erstes elektronisches Schaltelement 202; das zweite abschaltbare Halbleiterventil 206 ist ein zweites elektronisches Schaltelement 206. Das erste abschaltbare Halbleiterventil 202 und das zweite abschaltbare Halbleiterventil 206 sind jeweils als ein IGBT (insulated-gate bipolar transistor) ausgestaltet. Das erste abschaltbare Halbleiterventil 202 ist elektrisch in Reihe geschaltet mit dem zweiten abschaltbaren Halbleiterventil 206. Am Verbindungspunkt zwischen den beiden Halbleiterventilen ist ein erster galvanischer Submodulanschluss 212 angeordnet. An dem Anschluss des zweiten Halbleiterventils 206, welcher dem Verbindungspunkt gegenüberliegt, ist ein zweiter galvanischer Submodulanschluss 215 angeordnet. Der zweite Submodulanschluss 215 ist weiterhin mit einem ersten Anschluss des Energiespeichers 210 verbunden; ein zweiter Anschluss des Energiespeichers 210 ist elektrisch verbunden mit dem Anschluss des ersten Halbleiterventils 202, der dem Verbindungspunkt gegenüberliegt.

Der Energiespeicher 210 ist also elektrisch parallel geschaltet zu der Reihenschaltung aus dem ersten Halbleiterventil 202 und dem zweiten Halbleiterventil 206. Durch entsprechende Ansteuerung des ersten Halbleiterventils 202 und des zweiten Halbleiterventils 206 durch eine submodulinterne elektronische Ansteuerschaltung 220 kann erreicht werden, dass zwischen dem ersten galvanischen Submodulanschluss 212 und dem zweiten galvanischen Submodulanschluss 215 entweder die Spannung des Energiespeichers 210 ausgegeben wird oder keine Spannung ausgegeben wird (d.h. eine Nullspannung ausgegeben wird). Durch Zusammenwirken der Submodule der einzelnen Phasenmodulzweige kann so die jeweils gewünschte Ausgangsspannung des Umrichters erzeugt werden. Zur submodulexternen Kommunikation weist das Submodul 201 einen optischen Kommunikationseingang 222 und einen optischen Kommunikationsausgang 225 auf. Der optische Kommunikationseingang 222 und der optische Kommunikationsausgang 225 sind mit der Ansteuerschaltung 220 verbunden. An den optischen Kommunikationseingang 222 und den optischen Kommunikationsausgang 225 werden zur submodulexternen Kommunikation jeweils Lichtwellenleiter angeschlossen. Weiterhin kann die Ansteuerschaltung 220 auch Zustände des Submoduls erfassen und an die zentrale Steuereinrichtung 35 melden. In Figur 2 ist beispielhaft mittels einer gestrichelten Linie angedeutet, dass die Ansteuerschaltung 220 den Ladezustand des Energiespeichers 210 erfasst und an die zentrale Steuereinrichtung 35 melden kann.

Der optische Kommunikationseingang 222 des Submoduls 201 leitet die an ihm eintreffenden optischen Nachrichten zu der Ansteuerschaltung 220 weiter; die Ansteuerschaltung 220 gibt (veränderte oder unveränderte) optische Nachrichten an dem optischen Kommunikationsausgang 225 des Submoduls aus.

In Figur 3 ist ein weiteres Ausführungsbeispiel eines Submoduls 301 dargestellt. Bei diesem Submodul 301 kann es sich beispielsweise um das Submodul 1_n (oder auch um eines der anderen in Figur 1 dargestellten Submodule) handeln. Neben dem bereits aus Figur 2 bekannten ersten Halbleiterventil 202, zweiten Halbleiterventil 206, erster Diode 204, zweiter Diode 208, Energiespeicher 210 und Ansteuerschaltung 220 weist das in Figur 3 dargestellte Submodul 301 ein drittes abschaltbares Halbleiterventil 302 mit einer antiparallel geschalteten dritten Diode 304 sowie ein viertes abschaltbares Halbleiterventil 306 mit einer vierten antiparallel geschalteten Diode 308 auf. Das dritte abschaltbare Halbleiterventil 302 ist ein drittes elektronisches Schaltelement 302; das vierte abschaltbare Halbleiterventil 306 ist ein viertes elektronisches Schaltelement 306. Das dritte abschaltbare Halbleiterventil 302 und das vierte abschaltbare Halbleiterventil 306 sind jeweils als ein IGBT ausgestaltet. Im Unterschied zur Schaltung der Figur 2 ist der zweite galvanische Submodulanschluss 315 nicht mit dem zweiten Halbleiterventil 206 verbunden, sondern mit einem Mittelpunkt einer elektrischen Reihenschaltung aus dem dritten Halbleiterventil 302 und dem vierten Halbleiterventil 306.

Das Submodul 301 der Figur 3 ist ein sogenanntes Vollbrückenmodul 301. Dieses Vollbrückenmodul 301 zeichnet sich dadurch aus, dass bei entsprechender Ansteuerung der vier Halbleiterventile zwischen dem ersten galvanischen Submodulanschluss 212 und dem zweiten galvanischen Submodulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 301 die Polarität der Ausgangsspannung umgekehrt werden. Der Umrichter 1 kann entweder nur Halbbrückenmodule 201, nur Vollbrückenmodule 301 oder auch Halbbrückenmodule 201 und Vollbrückenmodule 301 aufweisen.

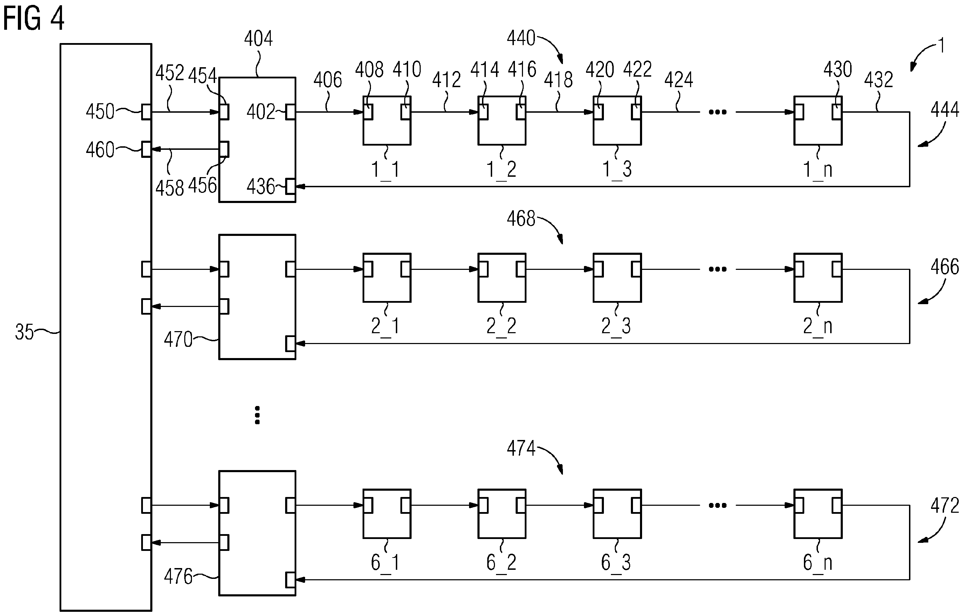

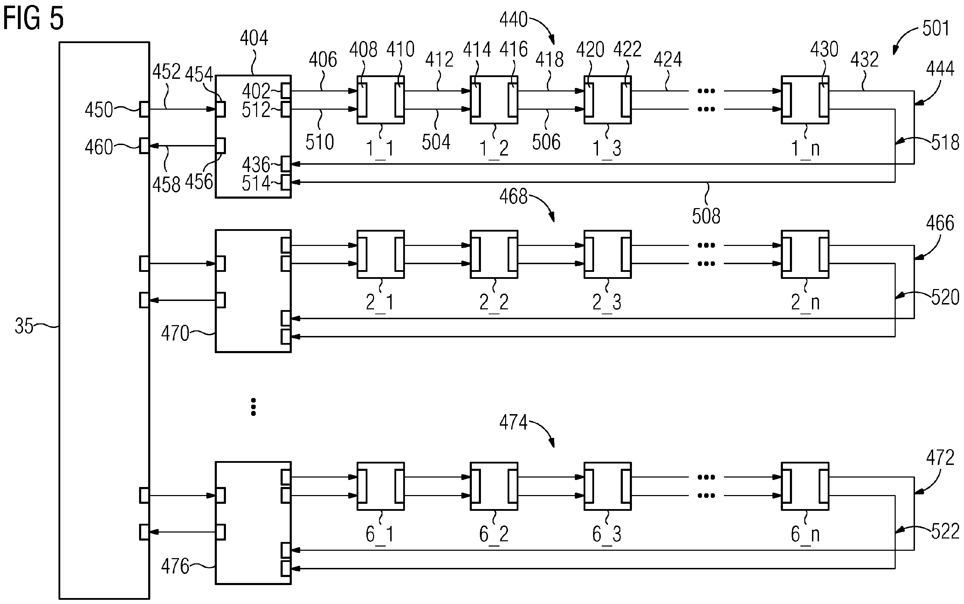

Die Darstellungen der Figuren 2 und 3 zeigen jeweils ein Submodul mit dem ersten galvanischen Submodulanschluss 212 und dem zweiten galvanischen Submodulanschluss 215 bzw. 315. Über den ersten galvanischen Submodulanschluss 212 und den zweiten galvanischen Submodulanschluss 215, 315 fließen große elektrische Ströme des Umrichters. Zusätzlich weist jedes Submodul die Ansteuerschaltung 220 auf, die insbesondere die Schaltelemente 202, 206, 302 und/oder 306 ansteuert. Diese Ansteuerschaltung 220 kommuniziert über den optischen Kommunikationseingang 222 und den optischen Kommunikationsausgang 225 mittels Lichtwellenleitern potentialgetrennt mit submodulexternen Einheiten (hier: mit einer submodulexternen Kommunikationseinrichtung, vgl. Figuren 4 und 5). Die Verschaltung/Verbindung des optischen Kommunikationseingangs 222 und des optischen Kommunikationsausgang 225 der einzelnen Submodule mittels Lichtwellenleitern wird im Folgenden beschrieben.

In Figur 4 sind von dem aus Figur 1 bekannten Multilevelumrichter 1 lediglich die zentrale Steuereinrichtung 35 sowie beispielhaft die Submodule des ersten Phasenmodulzweigs 11, des zweiten Phasenmodulzweig 13 und des sechsten Phasenmodulzweigs 29 dargestellt. Alle weiteren Submodule des Multilevelumrichters 1 sind gleichartig wie diese beispielhaft dargestellten Submodule angeordnet.

Im rechten oberen Teil der Figur 4 sind die Submodule 1_1 bis 1_n des ersten Phasenmodulzweigs 11 dargestellt. Im Unterschied zur Darstellung der Figur 1 sind in Figur 4 die leistungselektronischen galvanischen Anschlüsse der Submodule nicht dargestellt; es sind in Figur 4 lediglich der optische Kommunikationseingang und der optische Kommunikationsausgang der einzelnen Submodule dargestellt.

Ein optischer Ausgang 402 einer ersten Kommunikationseinrichtung 404 ist mittels eines ersten Lichtwellenleiters 406 mit einem ersten Kommunikationseingang 408 des Submoduls 1_1 optisch verbunden. Ein optischer Kommunikationsausgang 410 des Submoduls 1_1 ist mittels eines zweiten Lichtwellenleiters 412 mit einem optischen Kommunikationseingang 414 des Submoduls 1_2 optisch verbunden. Ein optischer Kommunikationsausgang 416 des Submoduls 1_2 ist mittels eines dritten Lichtwellenleiters 418 mit einem optischen Kommunikationseingang 420 des Submoduls 1_3 optisch verbunden. Ein optischer Kommunikationsausgang 422 des Submoduls 1_3 ist mittels eines vierten Lichtwellenleiters 424 mit dem Submodul 1_4 optisch verbunden und so weiter. Schließlich ist ein optischer Kommunikationsausgang 430 des letzten Submoduls 1_n mittels eines Lichtwellenleiters 432 mit einem optischen Eingang 436 der ersten Kommunikationseinrichtung 404 optisch verbunden. Der Lichtwellenleiter 432 kann auch als ein Rück-Lichtwellenleiter 432 bezeichnet werden.

Die n Submodule 1_1 bis 1_n bilden eine erste Serienschaltung 440. Die erste Serienschaltung 440 bildet mit der ersten Kommunikationseinrichtung 404 eine erste Ringstruktur 444 des Umrichters 1.

Die erste Kommunikationseinrichtung 404 ist mittels zweiter Lichtwellenleiter mit der Steuereinrichtung 35 optisch verbunden. So verläuft von einem optischen Ausgang 450 der Steuereinrichtung 35 ein Lichtwellenleiter 452 zu einem weiteren optischen Eingang 454 der ersten Kommunikationseinrichtung 404. Mittels dieses Lichtwellenleiters 452 werden Nachrichten von der Steuereinrichtung 35 auf optischem Wege zu der ersten Kommunikationseinrichtung 404 übertragen. Von einem weiteren optischen Ausgang 456 der ersten Kommunikationseinrichtung 404 verläuft ein weiterer Lichtwellenleiter 458 zu einem optischen Eingang 460 der Steuereinrichtung 35. Anders als in Figur 4 dargestellt, können die Lichtwellenleiter 452, 458 zwischen der Steuereinrichtung 35 und der der ersten Kommunikationseinrichtung 404 sehr lang sein: sie können beispielsweise um ein Vielfaches länger sein als die Lichtwellenleiter in der ersten Ringstruktur 444.

In der ersten Ringstruktur 444 ist die erste Kommunikationseinrichtung 404 ein Master 404; die einzelnen Submodule 1_1 ... 1_n sind jeweils Slaves. Die als Master arbeitende erste Kommunikationseinrichtung 404 kontrolliert also die Nachrichtenübertragung zu den einzelnen als Slave arbeitenden Submodulen 1_1 bis 1_n. Das bedeutet, dass sämtliche Nachrichtenübertragungen innerhalb der ersten Ringstruktur 444 durch die erste Kommunikationseinrichtung 404 initiiert werden.

Der modulare Multilevel-Umrichter 1 weist weiterhin eine zweite Ringstruktur 466 auf, welche ihrerseits eine zweite Serienschaltung 468 und zweite Kommunikationseinrichtung 470 aufweist. Die zweite Serienschaltung 468 umfasst die in Serie geschalteten Submodule 2_1 bis 2_n.

Ebenso weist der modulare Multilevel-Umrichter 1 weitere Ringstrukturen auf, von denen in Figur 4 die m-te Ringstruktur 472 dargestellt ist. Diese m-te Ringstruktur 472 weist im Ausführungsbeispiel eine m-te Serienschaltung 474 sowie eine m-te Kommunikationseinrichtung 476 auf. Die m-te Serienschaltung 474 ihrerseits weist die Submodule 6_1 bis 6_n auf. Der Multilevelumrichter 1 weist also eine Mehrzahl von unabhängigen Serienschaltungen 440, 468 bis 474 und folglich auch eine Mehrzahl von unabhängigen Ringstrukturen 444, 466 bis 472 auf.

In Figur 5 ist ein weiteres Ausführungsbeispiel eines modularen Multilevel-Umrichters 501 dargestellt. Im Unterschied zu dem Ausführungsbeispiel der Figur 4 ist in Figur 5 jedes Submodul der Serienschaltung mit seinem benachbarten Submodul mittels zweier Lichtwellenleiter optisch verbunden. Dabei ist einer der beiden Lichtwellenleiter ein redundanter Lichtwellenleiter. So ist beispielsweise bei der ersten Ringstruktur 444 das Submodul 1_1 mit dem Submodul 1_2 nicht nur über den zweiten Lichtwellenleiter 412 optisch verbunden, sondern diese beiden Submodule sind zusätzlich über einen Lichtwellenleiter 504 optisch miteinander verbunden. Dabei ist der Lichtwellenleiter 504 ein redundanter Lichtwellenleiter.

Ebenso ist das Submodul 1_2 mit dem Submodul 1_3 nicht nur mittels des dritten Lichtwellenleiters 418 optisch verbunden, sondern auch mittels eines Lichtwellenleiters 506. In gleicher Art und Weise ist auch das n-te Submodul 1_n mit der ersten Kommunikationseinrichtung 404 nicht nur mittels des Lichtwellenleiters 432 (Rück-Lichtwellenleiter 432) optisch verbunden, sondern auch mittels eines Lichtwellenleiters 508 (zusätzlicher Rück-Lichtwellenleiter 508). Ebenso ist auch die erste Kommunikationseinrichtung 404 mit dem Submodul 1_1 nicht nur über den ersten Lichtwellenleiter 406 optisch verbunden, sondern auch über einen zusätzlichen Lichtwellenleiter 510. Dabei sind die Lichtwellenleiter 504, 506, 508 und 510 redundant, d.h. sie sind im Normalbetrieb nicht für die Nachrichtenübertragung innerhalb der ersten Ringstruktur 444 erforderlich. Sollte jedoch einer der Lichtwellenleiter 406, 412, 418, 424 oder 432 ausfallen, dann wird dessen Aufgabe von dem optisch parallel geschalteten redundanten Lichtwellenleiter 504, 506, 508 beziehungsweise 510 übernommen. Dabei kann die Richtung der Nachrichtenübertragung (symbolisiert durch die Pfeilspitze an den Lichtwellenleitern) bei den redundanten zusätzlichen Lichtwellenleitern auch umgekehrt sein zu den nichtredundanten Lichtwellenleitern. Die erste Kommunikationseinrichtung 404 weist für die redundanten Lichtwellenleiter einen zusätzlichen optischen Ausgang 512 und einen zusätzlichen optischen Eingang 514 auf. Alternativ können auch zwei parallel betriebene Kommunikationseinrichtungen verwendet werden, um ausreichend optische Ausgänge und Eingänge zur Verfügung zu stellen.

Durch die redundanten Lichtwellenleiter existiert eine erste redundante Ringstruktur 518, die bezüglich der ersten Ringstruktur 444 redundant ist. In gleicher Art und Weise existiert eine zweite redundante Ringstruktur 520, die bezüglich der zweiten Ringstruktur 466 redundant ist. Dies wiederholt sich bei den anderen Ringstrukturen des Umrichters; schließlich gibt es auch eine m-te redundante Ringstruktur 522, die bezüglich der m-ten Ringstruktur 472 redundant ist.

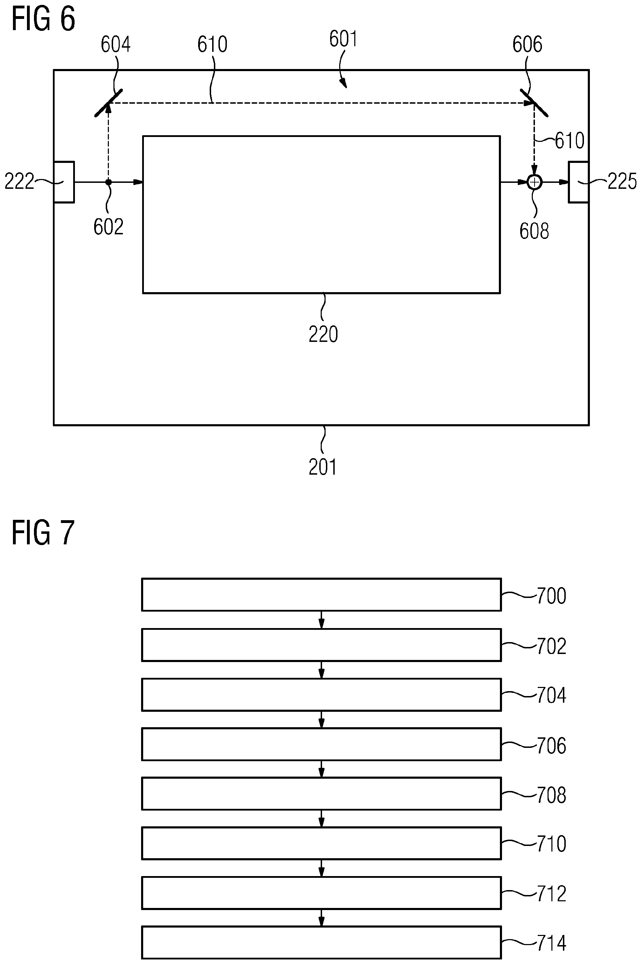

In Figur 6 ist ein optionales beispielhaftes Detail des Submoduls 201 der Figur 2 dargestellt: eine Überbrückungseinrichtung 601. Das Submodul 301 der Figur 3 kann ebenfalls eine solche Überbrückungseinrichtung aufweisen.

Die optische Überbrückungseinrichtung 601 des Submoduls 201 stellt einen optischen Bypass 601 dar. Die Überbrückungseinrichtung 601 weist einen optischen Verteiler 602, einen ersten optischen Spiegel 604, einen zweiten optischen Spiegel 606 und einem optischen Sammelpunkt 608 (optischen Additionspunkt 608) auf.

Am optischen Kommunikationseingang 222 wird ein Teil des eintreffenden Lichts an dem optischen Verteiler 602 abgezweigt und (bei aktivierter Überbrückungseinrichtung) über den ersten optischen Spiegel 604 und den zweiten optischen Spiegel 606 zu dem optischen Sammelpunkt 608 geleitet. Am optischen Sammelpunkt 608 wird das Licht des reflektierten Lichtstrahls 610 in den optischen Kommunikationsausgang 225 eingespeist.

Der erste optische Spiegel 604 hat nur bei einem Ausfall (Defekt) des Submoduls (zum Beispiel bei einem Ausfall der submodulinternen Spannungsversorgung) die in Figur 6 dargestellte Stellung und leitet nur dann den reflektierten Lichtstrahl 610 zu dem zweiten Spiegel 606. Die Überbrückungseinrichtung ist also nur bei einem Ausfall des Submoduls aktiviert. Bei einem funktionsfähigen Submodul (zum Beispiel bei funktionierender submodulinterner Spannungsversorgung) hat der Spiegel (beispielsweise durch einen Elektromagneten, der gegen die Kraft einer Feder wirkt) eine andere Lage, in der er das abgezweigte Licht nicht zu dem zweiten optischen Spiegel 606 weiterleitet: die Überbrückungseinrichtung 601 ist dann deaktiviert.

Auf diese Weise kann auch bei einem Ausfall/Defekt des Submoduls (beispielsweise bei Ausfall der submodulinternen Spannungsversorgung) die optische Nachrichtenübertragung über das Submodul 201 weiter stattfinden; die optische Nachrichtenübertragung in der Ringstruktur (in der sich das Submodul 201 befindet) wird durch den Ausfall des Submoduls nicht unterbrochen.

Der optische Verteiler 602, der erste optische Spiegel 604, der zweite optische Spiegel 606 und der optische Sammelpunkt 608 benötigen bei aktivierter Überbrückungseinrichtung 601 keine zusätzliche elektrische Hilfsenergie. Diese Überbrückungseinrichtung 601 dient zum (zumindest zeitweisen) optischen Überbrücken des Submoduls 201, mit anderen Worten verbindet die Überbrückungseinrichtung 601 zumindest zeitweise den optischen Kommunikationseingang 222 des Submoduls mit dem optischen Kommunikationsausgang 225 des Submoduls. Alle Submodule des Multilevelumrichters können eine derartige Überbrückungseinrichtung 601 aufweisen.

In Figur 7 ist ein beispielhafter Verfahrensablauf dargestellt, der bei dem Multilevelumrichter stattfindet. Dieser Verfahrensablauf betrifft das Ausführungsbeispiel der Figur 4.

Verfahrensschritt 700 (vorbereitender Verfahrensschritt, braucht nur einmal ausgeführt zu werden, d.h. braucht nicht bei jedem Verfahrensablauf erneut ausgeführt zu werden): Jedem Submodul 1_1, 1_2 bis 6_n wird eine eigene, insbesondere eine eineindeutige, Adresse zugeordnet. Eine solche Adresse ist beispielsweise eine individuelle Folge von Ziffern und/oder alphanumerischen Zeichen, zum Beispiel eine Submodulnummer.

### Verfahrensschritt 702:

Die Steuereinrichtung 35 sendet eine Nachricht (die auch als Telegramm oder Telegrammnachricht bezeichnet werden kann) über den Lichtwellenleiter 452 an die erste Kommunikationseinrichtung 404. Diese Nachricht ist an das Submodul 1_2 gerichtet und enthält folglich die Adresse des Submoduls 1 2. Außerdem enthält die Nachricht die Anweisung an das Submodul 1_2, das Schaltelement 202 zu schließen.

### Verfahrensschritt 704:

Die erste Kommunikationseinrichtung 404 empfängt die Nachricht und sendet diese an ihrem optischen Ausgang 402 in die erste Ringstruktur 444 aus. Die Nachricht gelangt über den ersten Lichtwellenleiter 406 zu dem optischen Kommunikationseingang 408 des Submoduls 1_1.

### Verfahrensschritt 706:

Das Submodul 1_1 erkennt anhand der in der Nachricht enthaltenen Adresse des Submoduls 1 2, dass diese Nachricht nicht für das Submodul 1_1 bestimmt ist. Daher sendet das Submodul 1_1 die Nachricht unverändert an seinen optischen Kommunikationsausgang 410 weiter und ignoriert die in der Nachricht enthaltene Anweisung an das Submodul 1 2. Daraufhin gelangt die Nachricht über den zweiten Lichtwellenleiter 412 zu dem Submodul 1_2.

### Verfahrensschritt 708:

Das Submodul 1_2 erkennt anhand der in der Nachricht enthaltenen Adresse des Submoduls 1_2, dass die Nachricht für es bestimmt ist und wertet die Nachricht aus. Dabei führt das Submodul 1_2 die in der Nachricht enthaltene Anweisung aus und schließt das Schaltelement 202.

### Verfahrensschritt 710:

Das Submodul 1_2 schreibt in die Nachricht Daten ein, welche das erfolgreiche Ausführen der Anweisung bestätigen (also hier beispielsweise: Schaltelement 202 erfolgreich geschlossen). Daraufhin sendet das Submodul 1_2 die Nachricht über den dritten Lichtwellenleiter 418 zu dem Submodul 1_3 weiter.

### Verfahrensschritt 712:

Das Submodul 1_3 ignoriert die in der Nachricht enthaltene Anweisung, weil die Nachricht nicht die Adresse des Submoduls 1_3, sondern die Adresse des Submoduls 1_2 enthält. Dieser Vorgang wiederholt sich solange, bis die Nachricht über den Rück-Lichtwellenleiter 432 zu der ersten Kommunikationseinrichtung 404 gelangt.

### Verfahrensschritt 714:

Die erste Kommunikationseinrichtung 404 sendet daraufhin die Nachricht über den weiteren Lichtwellenleiter 458 an die Steuereinrichtung 35 weiter.

An verschiedene Submodule adressierte Nachrichten werden nacheinander (das heißt in getrennten Zeitschlitzen) durch die erste Ringstruktur 444 übertragen. Die Datenübertragung ist also eine Zeitmultiplex-Datenübertragung, insbesondere eine Adressen-Multiplex-Datenübertragung.

Bei dem beschriebenen Multilevel-Umrichter und dem beschriebenen Verfahren ist besonders vorteilhaft, dass die Nachricht innerhalb der Ringstruktur jeweils von einem Submodul zu dem benachbarten Submodul direkt weitergesendet werden kann. Dadurch lassen sich insbesondere kurze Verbindungswege zwischen den Submodulen und damit kurze benötige Lichtwellenleiterlängen realisieren. Dies senkt die Kosten für den modularer Multilevel-Umrichter bzw. für die Durchführung des Verfahrens beträchtlich (im Vergleich zu der Schaltung nach Figur 1, bei der die Steuereinrichtung 35 die Nachricht jeweils mittels zweier individueller Lichtwellenleiters zu jedem einzelnen der Submodule sendet bzw. von diesen empfängt).

Es wurden ein Multilevel-Umrichter und ein Verfahren beschrieben, bei denen ein kodiertes Telegrammstreaming von Nachrichten (Telegrammnachrichten) von einem Master zu mehreren Submodulen stattfindet, wobei die Submodule und der Master eine serielle Ringstruktur bilden. In einer solchen Ringstruktur können beispielsweise 24 oder 36 Submodule angeordnet sein; es sind jedoch auch andere Anzahlen von Submodulen in einer derartigen Ringstruktur möglich. Die als Master arbeitende Kommunikationseinrichtung 404 sendet dabei fortlaufend Nachrichten über alle Submodule der seriellen Ringstruktur.

Die Nachrichten enthalten jeweils mindestens eine Submoduladresse, einen Lesebereich und einen Schreibbereich. In dem Lesebereich kann mindestens eine Anweisung für das adressierte Submodul enthalten sein, in den Schreibbereich kann das adressierte Submodul Daten einschreiben. Das angesprochene/adressierte Submodul liest also die an es gerichteten Informationen aus der in dem Ringkanal laufenden Datenübertragung aus und schreibt seine Daten in die Datenübertragung des Ringkanals zurück. Nachdem die Nachricht alle Submodule passiert hat, kommt die Nachricht mit den Daten der adressierten Submodule zurück zum Master, das heißt, zurück zur ersten Kommunikationseinrichtung 404. Dieses Verfahren und dieser Multilevel-Umrichter erlaubt eine beträchtliche Reduzierung der Längen der benötigten Lichtwellenleiter. Es sind Reduzierungen in der Größenordnung bis zu 90 % denkbar.

In der optionalen Ausführungsvariante der Figur 5 wird die serielle Ringstruktur verdoppelt, und die Kommunikationseinrichtung 404 wird mit zwei optischen Ausgängen und zwei optischen Eingängen versehen (alternativ können auch zwei Kommunikationseinrichtungen 404 als zwei Master verwendet werden). Durch die redundante Ringstruktur kann auch im Fehlerfall (z.B. im Falle eines Lichtleiterbruches) die Nachrichtenübertragung ungestört weiterlaufen. Auch bei dieser Ausführungsvariante ist immer noch eine Reduzierung der benötigten Lichtwellenleiterlängen von bis zu 80 % denkbar.

## Patentansprüche

1. Modularer Multilevelumrichter (1) mit Submodulen (1_1 bis 6_n), welche jeweils mindestens zwei elektronische Schaltelemente (202, 206), einen elektrischen Energiespeicher (210), zwei galvanische Stromanschlüsse (212, 215), einen optischen Kommunikationseingang (222) und einen optischen Kommunikationsausgang (225) aufweisen, wobei eine Mehrzahl der Submodule (1_1 bis 1_n) mittels ihres Kommunikationseingangs (222) und ihres Kommunikationsausgangs (225) zu einer Serienschaltung (440) verbunden sind,
**dadurch gekennzeichnet, dass**
- mindestens ein Submodul (201) eine optische Überbrückungseinrichtung (601) aufweist, die zumindest zeitweise den optischen Kommunikationseingang (222) des Submoduls (201) mit dem optischen Kommunikationsausgang (225) des Submoduls (201) optisch verbindet.

2. Modularer Multilevelumrichter nach Anspruch 1,
**dadurch gekennzeichnet, dass**
- das erste Submodul (1_1) der Serienschaltung (440) und das letzte Submodul (1_n) der Serienschaltung (440) jeweils mit einer der Serienschaltung (440) zugeordneten Kommunikationseinrichtung (404) verbunden sind.

3. Modularer Multilevelumrichter nach Anspruch 2,
**dadurch gekennzeichnet, dass**
- die Submodule (1_1 bis 1_n) der Serienschaltung (440) und die der Serienschaltung (440) zugeordnete Kommunikationseinrichtung (404) eine Ringstruktur (444) ausbilden.

4. Modularer Multilevelumrichter nach Anspruch 2 oder 3,
**dadurch gekennzeichnet, dass**
- die Kommunikationseinrichtung (404) ein Master ist und die Submodule (1 1 bis 1_n) der Serienschaltung (440) jeweils ein Slave sind.

5. Modularer Multilevelumrichter nach einem der vorhergehenden Ansprüche,
**dadurch gekennzeichnet, dass**
- die Überbrückungseinrichtung (601) einen optischen Spiegel (604) aufweist.

6. Modularer Multilevelumrichter nach einem der vorhergehenden Ansprüche,
**dadurch gekennzeichnet, dass**
- die benachbarten Submodule (1_1, 1_2) der Serienschaltung (440) mittels eines Lichtwellenleiters (412) optisch verbunden sind und/oder das erste Submodul (1_1) der Serienschaltung (440) und das letzte Submodul (1_n) der Serienschaltung (440) jeweils mittels eines Lichtwellenleiters (406, 432) mit der Kommunikationseinrichtung (404) optisch verbunden sind.

7. Modularer Multilevelumrichter nach einem der Ansprüche 2 bis 6,
**dadurch gekennzeichnet, dass**
- der modulare Multilevelumrichter (1) eine Steuereinrichtung (35) für die Submodule (1_1 bis 6_n) aufweist, wobei die Steuereinrichtung (35) mittels einer Kommunikationsverbindung (452, 458) mit der Kommunikationseinrichtung (404) verbunden ist.

8. Modularer Multilevelumrichter nach einem der vorhergehenden Ansprüche,
**dadurch gekennzeichnet, dass**
- jedes Submodul (1_1) der Serienschaltung (440) mit seinem benachbarten Submodul (1_2) mittels zweier Lichtwellenleiter (406, 510) verbunden ist, wobei einer der beiden Lichtwellenleiter (406, 510) ein redundanter Lichtwellenleiter (510) ist.

9. Modularer Multilevelumrichter nach einem der Ansprüche 2 bis 8,
**dadurch gekennzeichnet, dass**
- der Multilevelumrichter (1) eine Mehrzahl von Serienschaltungen (440, 468, 474) und eine Mehrzahl von den Serienschaltungen (440, 468, 474) zugeordneten Kommunikationseinrichtungen (404, 470, 476) aufweist.

10. Modularer Multilevelumrichter nach einem der Ansprüche 2 bis 9,
**dadurch gekennzeichnet, dass**
- der Multilevelumrichter (1) eine Mehrzahl von Ringstrukturen (444, 466, 472) aufweist.

11. Verfahren zum Übertragen einer Nachricht zwischen einer Kommunikationseinrichtung (404) und Submodulen (1_1 bis 1_n) eines modularen Multilevelumrichters, wobei die Submodule (1_1 bis 1_n) jeweils mindestens zwei elektronische Schaltelemente (202, 206), einen elektrischen Energiespeicher (210), zwei galvanische Stromanschlüsse (212, 215), einen optischen Kommunikationseingang (222) und einen optischen Kommunikationsausgang (225) aufweisen, und wobei die Submodule (1_1 bis 1_n) mittels ihres Kommunikationseingangs (222) und ihres Kommunikationsausgangs (225) zu einer Serienschaltung (440) verbunden sind, wobei bei dem Verfahren
- die Nachricht von der Kommunikationseinrichtung (404) mittels eines ersten Lichtwellenleiters (406) zu einem optischen Kommunikationseingang (408) eines ersten Submoduls (1_1) der Serienschaltung (440) übertragen wird,
- daraufhin die Nachricht von einem optischen Kommunikationsausgangs (410) des ersten Submoduls (1_1) mittels eines zweiten Lichtwellenleiters (412) zu einem optischen Kommunikationseingang (414) eines zweiten Submoduls (1_2) der Serienschaltung (440) übertragen wird, und
- die Nachricht nacheinander zu den weiteren Submodulen (1_3 bis 1_n) der Serienschaltung (440) übertragen wird, bis die Nachricht das letzte Submodul (1_n) der Serienschaltung (440) erreicht,
- wobei bei einem Defekt eines der Submodule dieses Submodul mittels einer optischen Überbrückungseinrichtung (601) optisch überbrückt wird, indem mittels der optischen Überbrückungseinrichtung (601) der optische Kommunikationseingang (222) des Submoduls (201) mit dem optischen Kommunikationsausgang (225) des Submoduls (201) optisch verbunden wird.

12. Verfahren nach Anspruch 11,
**dadurch gekennzeichnet, dass**
- die Nachricht von einem optischen Kommunikationsausgangs (430) des letzten Submoduls (1_n) zu der Kommunikationseinrichtung (404) übertragen wird.

13. Verfahren nach Anspruch 11 oder 12,
**dadurch gekennzeichnet, dass**
- jedem Submodul (1_1 bis 1_n) der Serienschaltung (440) eine Adresse zugeordnet (700) ist,
- die Nachricht mit der Adresse eines Submoduls (1_n) der Serienschaltung (440) versehen wird (702),
- aufgrund dieser Adresse dieses eine Submodul (1_2) eine in der Nachricht enthaltene Anweisung ausführt (708).

14. Verfahren nach Anspruch 13,
**dadurch gekennzeichnet, dass**
- dieses eine Submodul (1_2) der Serienschaltung (440) Daten in die Nachricht einschreibt (710).

15. Verfahren nach einem der Ansprüche 13 oder 14,
**dadurch gekennzeichnet, dass**
- mehrere Nachrichten nacheinander in getrennten Zeitschlitzen übertragen werden.

## Claims

1. Modular multilevel converter (1) having submodules (1_1 to 6_n) that each have at least two electronic switching elements (202, 206), an electrical energy store (210), two electrical connections (212, 215), an optical communication input (222) and an optical communication output (225), wherein a plurality of the submodules (1_1 to 1_n) are connected by means of their communication input (222) and their communication output (225) to perform a series circuit (440),
**characterized in that**
- at least one submodule (201) has an optical bypass device (601) which at least intermittently optically connects the optical communication input (222) of the submodule (201) to the optical communication output (225) of the submodule (201).

2. Modular multilevel converter according to Claim 1,
**characterized in that**
- the first submodule (1_1) of the series circuit (440) and the last submodule (1_n) of the series circuit (440) are each connected to a communication device (404) allocated to the series circuit (440).

3. Modular multilevel converter according to Claim 2,
**characterized in that**
- the submodules (1_1 to 1_n) of the series circuit (440) and the communication device (404) allocated to the series circuit (440) form a ring structure (444).

4. Modular multilevel converter according to Claim 2 or 3,
**characterized in that**
- the communication device (404) is a master and each of the submodules (1_1 to 1_n) of the series circuit (440) is a slave.

5. Modular multilevel converter according to one of the preceding claims,
**characterized in that**
- the bypass device (601) has an optical mirror (604).

6. Modular multilevel converter according to one of the preceding claims,
**characterized in that**
- the adjacent submodules (1_1, 1_2) of the series circuit (440) are optically connected by means of an optical fiber (412) and/or the first submodule (1_1) of the series circuit (440) and the last submodule (1_n) of the series circuit (440) are each optically connected to the communication device (404) by means of an optical fiber (406, 432).

7. Modular multilevel converter according to one of Claims 2 to 6,
**characterized in that**
- the modular multilevel converter (1) has a control device (35) for the submodules (1_1 to 6_n), wherein the control device (35) is connected to the communication device (404) by means of a communication link (452, 458).

8. Modular multilevel converter according to one of the preceding claims,
**characterized in that**
- each submodule (1_1) of the series circuit (440) is connected to its adjacent submodule (1_2) by means of two optical fibers (406, 510), wherein one of the two optical fibers (406, 510) is a redundant optical fiber (510).

9. Modular multilevel converter according to one of Claims 2 to 8,
**characterized in that**
- the multilevel converter (1) has a plurality of series circuits (440, 468, 474) and a plurality of communication devices (404, 470, 476) allocated to the series circuits (440, 468, 474).

10. Modular multilevel converter according to one of Claims 2 to 9,
**characterized in that**
- the multilevel converter (1) has a plurality of ring structures (444, 466, 472).

11. Method for transmitting a message between a communication device (404) and submodules (1_1 to 1_n) of a modular multilevel converter, wherein each of the submodules (1_1 to 1_n) has at least two electronic switching elements (202, 206), an electrical energy store (210), two electrical connections (212, 215), an optical communication input (222) and an optical communication output (225), and wherein the submodules (1_1 to 1_n) are connected by means of their communication input (222) and their communication output (225) to form a series circuit (440), wherein the method involves
- the message being transmitted from the communication device (404) to an optical communication input (408) of a first submodule (1_1) of the series circuit (440) by means of a first optical fiber (406),
- the message then being transmitted from an optical communication output (410) of the first submodule (1_1) to an optical communication input (414) of a second submodule (1_2) of the series circuit (440) by means of a second optical fiber (412), and
- the message being transmitted to the further submodules (1_3 to 1_n) of the series circuit (440) in succession until the message reaches the last submodule (1_n) of the series circuit (440),
- wherein a defect in one of the submodules results in this submodule being optically bypassed by means of an optical bypass device (601) by virtue of the optical bypass device (601) being used to optically connect the optical communication input (222) of the submodule (201) to the optical communication output (225) of the submodule (201) .

12. Method according to Claim 11,
**characterized in that**
- the message is transmitted from an optical communication output (430) of the last submodule (1_n) to the communication device (404).

13. Method according to Claim 11 or 12,
**characterized in that**
- each submodule (1_1 to 1_n) of the series circuit (440) has an allocated (700) address,
- the message is provided (702) with the address of a submodule (1_n) of the series circuit (440),
- this one submodule (1_2) takes this address as a basis for executing (708) an instruction contained in the message.

14. Method according to Claim 13,
**characterized in that**
- this one submodule (1_2) of the series circuit (440) writes (710) data into the message.

15. Method according to either of Claims 13 and 14,
**characterized in that**
- multiple messages are transmitted in succession in separate time slots.

## Revendications

1. Onduleur (1) modulaire à plusieurs niveaux, comprenant des sous-modules (1_1 à 6_n), qui ont chacun au moins deux éléments (202, 206) électroniques de coupure, un accumulateur (210) d'énergie électrique, deux bornes (212, 215) de courant galvaniques, une entrée (222) de communication optique et une sortie (225) de communication optique, une pluralité des sous-modules (1_1 à 1_n) étant reliés au moyen de leur entrée (222) de communication et de leur sortie (225) de communication en un circuit (440) série,
**caractérisé en ce que**
- au moins un sous-module (201) a un dispositif (601) de court-circuit optique, qui, au moins de temps en temps, met l'entrée (222) de communication optique du sous-module (201) en communication avec la sortie (225) de communication optique du sous-module (201).

2. Onduleur modulaire à plusieurs niveaux suivant la revendication 1,
**caractérisé en ce que**
le premier sous-module (1_1) du circuit (440) série et le dernier sous-module (1_n) du circuit (440) série sont reliés chacun à un dispositif (404) de communication associé au circuit (440) série.

3. Onduleur modulaire suivant la revendication 2,
**caractérisé en ce que**
- les sous-modules (1_1 à 1_n) du circuit (440) série et le dispositif (404) de communication associé au circuit (440) série constituent une structure (444) en anneau.

4. Onduleur modulaire suivant la revendication 2 ou 3,
**caractérisé en ce que**
- le dispositif (404) de communication est un maître et les sous-modules (1_1, 1_n) du circuit (440) série sont chacun un esclave.

5. Onduleur modulaire suivant l'une des revendications précédentes,
**caractérisé en ce que**
- le dispositif (601) de court-circuit a un miroir (604) optique.

6. Onduleur modulaire suivant l'une des revendications précédentes,
**caractérisé en ce que**
- les sous-modules (1_1, 1_2) voisins du circuit (440) série sont reliés optiquement au moyen d'une fibre (412) optique et/ou le premier sous-module (1_1) du circuit (440) série et le dernier sous-module (1_n) du circuit (440) série sont reliés optiquement chacun au moyen d'une fibre (406, 432) optique au dispositif (404) de communication.

7. Onduleur modulaire suivant l'une des revendications 2 à 6,
**caractérisé en ce que**
- l'onduleur (1) modulaire à plusieurs niveaux a un dispositif (35) de commande des sous-modules (1_1 à 6_n), le dispositif (35) de commande étant relié au dispositif (404) de communication au moyen d'une liaison (452, 458) de communication.

8. Onduleur modulaire suivant l'une des revendications précédentes,
**caractérisé en ce que**
- chaque sous-module (1_n) du circuit (440) série est relié à son sous-module (1_2) voisin au moyen de deux fibres (406, 510) optiques, l'une des fibres (406, 510) optiques étant une fibre (510) optique redondante.

9. Onduleur modulaire suivant l'une des revendications 2 à 8,
**caractérisé en ce que**
- l'onduleur (1) à plusieurs niveaux a une pluralité de circuits (440, 468, 474) série et une pluralité de dispositifs (404, 470, 476) de communication associés aux circuits (440, 468, 474) série.

10. Onduleur modulaire suivant l'une des revendications 2à 9,
**caractérisé en ce que**
- l'onduleur (1) à plusieurs niveaux a une pluralité de structures (444, 466, 472) en anneau.

11. Procédé de transmission d'un message entre un dispositif (404) de communication et des sous-modules (1_1 à 1_n) d'un onduleur modulaire à plusieurs niveaux, les sous-modules (1_1 à 1_n) ayant chacun au moins deux éléments (202, 206) électroniques de coupure, un accumulateur (210) d'énergie électrique, deux bornes (212, 215) de courant galvaniques, une entrée (222) de communication optique et une sortie (225) de communication optique, et dans lequel les sous-modules (1_1, 1_n) sont reliés en un circuit (440) série au moyen de leur entrée (222) de communication et de leur sortie (225) de communication, dans lequel, dans le procédé,
- on transmet le message du dispositif (404) de communication au moyen d'une première fibre (406) optique à une entrée (408) de communication optique d'un premier sous-module (1_1) du circuit (440) série,
- on transmet ensuite le message d'une sortie (410) de communication optique du premier sous-module (1_1) au moyen d'une deuxième fibre (412) optique à une entrée (414) de communication optique d'un deuxième sous-module (1_2) du circuit (440) série, et
- on transmet le message successivement aux autres sous-modules (1_3, 1_n) du circuit (440) série jusqu'à que le message atteigne le dernier sous-module (1_n) du circuit (440) série,
- dans lequel, dans le cas d'un défaut de l'un des sous-modules, on court-circuite optiquement ce sous-module au moyen d'un dispositif (601) de court-circuit optique en reliant optiquement, au moyen du dispositif (601) de court-circuit optique, l'entrée (222) de communication optique du sous-module (201) à la sortie (225) de communication optique du sous-module (201).

12. Procédé suivant la revendication 11,
**caractérisé en ce que**
- l'on transmet le message d'une sortie (430) de communication optique du dernier sous-module (1_n) au dispositif (404) de communication.

13. Procédé suivant la revendication 11 ou 12,
**caractérisé en ce que**
- une adresse (700) est affectée à chaque sous-module (1_1 à 1_n) du circuit (440) série,
- on munit (702) le message de l'adresse d'un sous-module (1_n) du circuit (440) série,
- sur la base de cette adresse, ce un sous-module (1_2) exécute (708) une instruction contenue dans le message.

14. Procédé suivant la revendication 13,
**caractérisé en ce que**
- ce un sous-module (1_2) du circuit (440) série inscrit (710) des données dans le message.

15. Procédé suivant l'une des revendications 13 ou 14,
**caractérisé en ce que**
- on transmet plusieurs messages les uns après les autres dans des créneaux temporels distincts.
